# EUROPEAN PATENT SPECIFICATION

(11) **EP 2 031 440 B1**
(45) Date of publication and mention of the grant of the patent: **28.09.2011**
(21) Application number: 08013373.9
(22) Date of filing: 24.07.2008
(51) Int. Cl.: G03B 5/00, H04N 5/232

(54) **Image stabilization apparatus for camera**
Bildstabilisierungsvorrichtung für eine Kamera
Appareil de stabilisation d'image pour caméra

(30) Priority: 29.08.2007 JP 2007222906; 29.08.2007 JP 2007222907
(43) Date of publication of application: 04.03.2009
(73) Proprietor: FUJIFILM Corporation, Tokyo (JP)
(72) Inventor: Moriya, Chikatsu, Saitama-shi Saitama (JP); Otani, Kazunori, Saitama-shi Saitama (JP)
(74) Representative: Klunker . Schmitt-Nilson . Hirsch

(56) References cited:
- EP-A- 1 102 107
- EP-A- 1 713 259
- JP-A- 9 074 515
- US-A- 5 619 030

## Description

### BACKGROUND OF THE INVENTION

### 1. Technical Field

The invention relates to an image stabilization apparatus for camera, and more particularly, to an image stabilization apparatus for camera that corrects image blur which is caused by vibration applied to the camera (an imaging optical system).

### 2. Description of the Related Art

A known image stabilization apparatus for a television camera is configured, for example, so that an anti-vibration lens is disposed in an imaging optical system to be movable in a plane orthogonal to an optical axis, and when vibration is applied to the camera (the imaging optical system of the camera), image blur is corrected by driving the anti-vibration lens by an actuator in a direction of canceling the vibration. In such an image stabilization apparatus, the vibration occurring in the camera is detected by a vibration detection sensor (an angular velocity sensor, an acceleration sensor, or the like), and an amount of displacement of the anti-vibration lens for correcting the image blur is obtained based on a sensor signal (a vibration signal) output from the vibration detection sensor (for example, see JP Hei.7-261224 A (corresponding to U.S. Patent Nos.5,623,705 and 5,634,145).

US Patent No. 5,619,030 relates to a controller, which uses the outputs of a mechanical sensor and an electrical sensor for detecting camera fluctuations and preventing image blur based on the outputs.

Also, generally, the television camera is used with being mounted on a mount board such as a tripod or a camera platform. JP Hei.9-74515 A describes a method in which a function of image stabilization is installed not in a lens device but in a mount board. According to JP Hei.9-74515 A, a vibrating device for shaking the entire camera is installed in the mount board, and a vibration detection sensor for detecting camera vibration is installed in the mount board. Also, the entire camera is vibrated by the vibrating device so that the camera vibration is cancelled based on a sensor signal output from the vibration detection sensor.

Also, generally, when a camera user is intentionally panning and tilting the camera, the image stabilization is automatically turned off, or the effect (vibration detection sensitivity) of the image stabilization is automatically reduced. When the sensor signal output from the vibration detection sensor represents some change in a camera posture, a panning/tilting judgment as to whether the sensor signal is generated based on vibration or based on the intentional panning/tilting operation of the camera user is made in accordance with whether or not the sensor signal satisfies a predetermined condition indicating that the panning/tilting operation is being performed. Meanwhile, JP 2000-39641 A (corresponding to U.S. Patent No.6,148,150) describes a method that includes acquiring a panning/tilting signal, which indicates as to whether or not the panning/tilting operation is being performed, from a camera platform that is used to pan and tilt the camera and making a panning/tilting judgment based on the panning/tilting signal.

European Patent Publication EP1102107 A2 discloses a vibration isolator, which determines a speed of a vibration applied to a camera with an angular speed sensor, which is separate from the camera and arranged on a floor in order that a vibration which occurs in the vibration isolator is never transmitted to the angular speed sensor.

There is a case where a mount board such as a tripod for supporting a television camera includes a vibration detection sensor, and has a function of detecting vibration in the mount board, which is also applied to the television camera, by using the vibration detection sensor. In this case, it is expected that the mount board has a function of outputting to its outside a sensor signal detected by the vibration detection sensor as a vibration signal. Also, in such a mount board, when a panning/tilting mechanism for panning and tilting the camera is provided, it is possible to know an effect of the panning/tilting operation on the sensor signal output from the vibration detection sensor. Hence, it is possible to output to its outside a signal from which the effect of the panning/titling operation on the sensor signal is eliminated, that is, a vibration signal which is obtained by performing a predetermined process for the sensor signal output from the vibration detection sensor and which only represents a true vibration for causing image blur to be removed, rather than outputting the sensor signal from the vibration detection sensor as the vibration signal.

The vibration signal is useful even for an image stabilization apparatus that has a vibration detection sensor as a component and does not need a vibration signal from an external device. However, with regard to the image stabilization apparatus that does not need the vibration signal from the external device, there has not been proposed a method of using the vibration signal from the external device.

Also, even if the vibration signal from the external device is available, there is concern that a trouble might occur in the image stabilization in the case where, for example, variation (noise) in a no-vibration state of the vibration signal is different from that in the sensor signal of the vibration detection sensor in the own apparatus. That is, normally, the sensor signal of the vibration detection sensor provided as a component of the own apparatus is passed through a low-pass filter (LPF) to remove signals (noises) of high frequency components which don't relate to the image stabilization. A cut-off frequency thereof is set such a level that the anti-vibration lens is not fluctuated in the no-vibration state.

On the other hand, when the vibration signal is acquired from the external device, it is not certain how many noises are superposed on the vibration signal. Hence, even if the signals of high frequency components are removed from the vibration signal by the LPF, there is concern that the cut-off frequency might be inappropriate and the anti-vibration lens might be fluctuated by an influence of the noises even in the no-vibration state.

From US 5,619,030 and EP 1 102 107 the use of mechanical and electrical vibration sensors is known.

### SUMMARY OF THE INVENTION

The invention has been made in view of the above circumstances and provides an image stabilization apparatus for camera that can perform the image stabilization without the vibration signal acquired from the external device but nevertheless can effectively use the vibration signal acquired from the external device.

Also, the invention provides an image stabilization apparatus for camera that can appropriately remove the noise of the vibration signal and then use the vibration signal when the vibration signal acquired from the external device is used for the image stabilization.

According to an image stabilization apparatus for camera includes an image stabilization unit, a vibration signal acquisition unit and a vibration signal validation unit. The image stabilization unit performs a image stabilization for canceling image blur being caused by vibration applied to an imaging optical system, based on a sensor signal which is output from a vibration detection sensor that detects the image blur. The vibration signal acquisition unit acquires a vibration signal from an external device. The vibration signal validation unit automatically or manually selects as to whether or not to validate the vibration signal acquired by the vibration signal acquisition unit. When the vibration signal validation unit selects to validate the vibration signal, the image stabilization unit performs the image stabilization based on the vibration signal instead of the sensor signal output from the vibration detection sensor.

With the above configuration, it is possible to effectively use the vibration signal acquired from the external device even in the image stabilization apparatus that does not need the vibration signal acquired from the external device.

The image stabilization apparatus for camera further includes a processing unit, a panning/tilting signal acquisition unit and a panning/tilting signal validation unit. The processing unit performs a panning/tilting judgment, based on the sensor signal output from the vibration detection sensor, as to whether or not a panning/tilting operation is being performed. When judging that the panning/tilting operation is being performed, the processing unit performs a process of suspending the image stabilization during a period in which the panning/tilting operation is being performed or reducing an effect of the image stabilization during a period in which the panning/tilting operation is being performed. The panning/tilting signal acquisition unit acquires a panning/tilting signal, which represents as to whether or not the panning/tilting operation is being performed, from the external device. The panning/tilting signal validation unit automatically or manually selects as to whether or not to validate the panning/tilting signal acquired by the panning/tilting signal acquisition unit. When the panning/tilting signal validation unit selects to validate the panning/tilting signal, the processing unit performs the panning/tilting judgment based on the panning/tilting signal.

With the above configuration, it is possible to acquire not only the vibration signal but also the panning/tilting signal for the panning/tilting judgment and effectively use those signals.

Also, when the vibration signal is input from the external device, the vibration signal validation unit may automatically validate the vibration signal.

Also, when the panning/tilting signal is input from the external device, the panning/tilting signal validation unit may automatically validate the panning/tilting signal.

Also, the image stabilization apparatus for camera may further include a noise removal unit and a setting unit. The noise removal unit removes noise from the vibration signal acquired by the vibration signal acquisition unit. The setting unit that sets frequencies of a signal component to be removed as the noise by the noise removal unit, based on a vibration signal which is acquired by the vibration signal acquisition unit at a time of no-vibration. When the image stabilization unit is to perform the image stabilization based on the vibration signal acquired by the vibration signal acquisition unit instead of the sensor signal of the vibration detection sensor, after the setting unit completes the setting, the image stabilization unit may perform the image stabilization based on the vibration signal acquired by the vibration signal acquisition unit.

With the above configuration, an appropriate noise cut level (a frequency of the signal component that will be removed as noise) with respect to the vibration signal is set before the vibration signal acquired from the external device is validated and used for the image stabilization. Thus, it is possible to perform the image stabilization without any problem even if the vibration signal, which has variation in the noise level and which is acquired from the external device, is used.

Also, when power is turned on, when a command of the setting is given or when it is instructed to perform the image stabilization based on the vibration signal acquired by the vibration signal acquisition unit, the setting unit may perform the setting.

Also, the external device may be a tripod that supports the camera.

According to the image stabilization apparatus for camera mentioned above, the image stabilization apparatus can perform the image stabilization without the vibration signal acquired from the external device but nevertheless can effectively use the vibration signal acquired from the external device.

Also, according to the image stabilization apparatus for camera mentioned above, it is possible to appropriately remove the noise of the vibration signal when the vibration signal acquired from the external device is used for the image stabilization.

### BRIEF DESCRIPTION OF THE DRAWINGS

Fig. 1 is a configuration diagram showing an imaging system according to an embodiment of the invention.
Fig. 2 is a block diagram showing the configuration of an image stabilization apparatus mounted on a lens device.
Fig. 3 is a flow chart showing a sequence of a selection process corresponding to either the case of the automatic selection of a valid sensor signal or the case of manual selection of a valid sensor signal.
Fig. 4 is a block diagram showing the configuration of an image stabilization apparatus mounted in a lens device, in which a cut level of noise to be removed from a vibration signal obtained from an external device can be set.
Fig. 5 is a flow chart showing a sequence of a process of performing an initialization setting for appropriately removing a noise of a vibration signal obtained from a tripod.

### DETAILED DESCRIPTION OF EMBODIMENTS OF THE INVENTION

Hereinafter, an image stabilization apparatus for camera according to the invention will be described in detail with reference to the drawings.

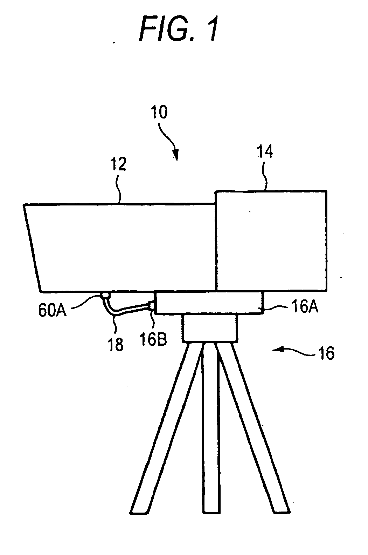

Fig. 1 is a configuration diagram showing an imaging system according to an embodiment of the invention. In the figure, a television camera 10 is, for example, a camera for taking broadcasting or business videos, and includes a lens device 12 and a camera device (a camera main body) 14.

The lens device 12 has an imaging optical system (an image-taking lens device) for forming a subject image, and also has a control circuit for controlling various lenses, an aperture diaphragm, and the like of the imaging optical system.

The camera device 14 is detachably equipped with the imaging optical system of the lens device 12 by a mount board, and includes an imaging device for performing the photoelectric conversion for a subject image formed by the imaging optical system and a signal processing circuit for generating and outputting a video signal in a predetermined form by performing various processes for the subject image signal acquired by the imaging device.

Also, the television camera 10 in the figure is fixed to an upper end portion (a camera platform section) 16A of a tripod 16, and is supported by the tripod 16. The upper end 16A of the tripod 16 is, generally, has a panning/tilting mechanism for manually or electrically panning and tilting the television camera 10, but specific description thereon will be omitted.

Also, a vibration signal to be described later is output from a predetermined connector 16B of the tripod 16, and the connector 16B is connected to a predetermined connector 60A of the lens device 12 through a cable 18. The lens device 12 is equipped with the image stabilization apparatus. The vibration signal output from the connector 16B of the tripod 16 is input to the image stabilization apparatus through the cable 18 and the connector 60A. The vibration signal is effectively used for the image stabilization in the image stabilization apparatus.

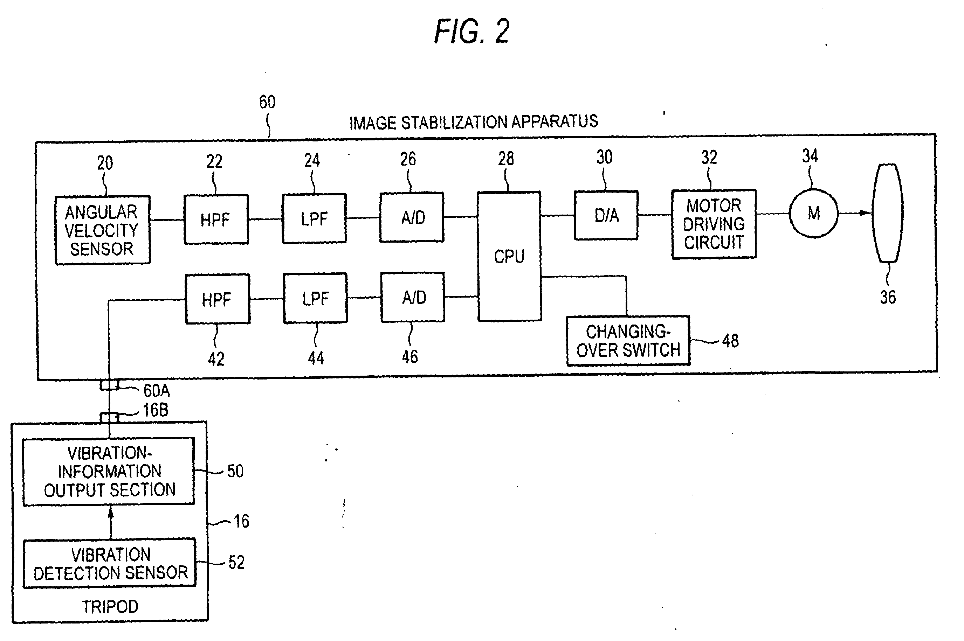

Fig. 2 is a block diagram showing the configuration of the image stabilization apparatus 60 mounted on the lens device 12. The anti-vibration lens 36 shown in the figure is disposed in the imaging optical system to be movable in an up and down direction (a vertical (perpendicular) direction) and a left and right direction (a horizontal direction) in the plane perpendicular to an optical axis of the imaging optical system. Also, the anti-vibration lens 36 is configured to be driven in the horizontal direction or the vertical direction by a motor (an actuator) 34. When vibration occurs in the camera (the imaging optical system), the motor 34 causes the anti-vibration lens 36 to move to a position (a position for canceling image blur caused by the vibration) for correcting image blur. Also, the anti-vibration lens 36 is driven similarly in any of the horizontal direction and the vertical direction in response to the vibration generated in respective directions. Thus, Fig. 2 shows only the configuration that the image stabilization is performed in one direction (for example, the horizontal direction). However, the anti-vibration lens 36 is configured similarly with respect to the other directions.

In the figure, an angular velocity sensor 20 is a gyro sensor that is provided as a vibration detection sensor for detecting vibration of the imaging optical system and is disposed on an upper face of a lens barrel or the like. From the angular velocity sensor 20, an electric signal having a voltage corresponding to the angular velocity of vibration which is generated, for example, in the horizontal direction of the imaging optical system is output as an angular velocity signal (a sensor signal).

In the angular velocity signal out from the angular velocity sensor 20, mainly a DC component (a component of a low frequency being not more than a predetermined cut-off frequency) thereof is cut off by a high pass filter (HPF) 22, and the other frequency components pass through the HPF 22. The angular velocity signal passing through the HPF 22 is subsequently input to a low pass filter (LPF) 24. In the LPF 24, signals (noises) of high frequency components which are not a target of the image stabilization are cut off from the frequency components of the angular velocity signal input, and the other frequency components pass through the LPF 24. The angular velocity signal passing through the LPF 24 is converted into a digital signal by an A/D converter 26, and then is input to a CPU 28.

The CPU 28 calculates an angle signal (position signal) by integrating the angular velocity signal input as described above, and calculates a correction amount for correcting image blur by amplifying the angle signal. The correction amount represents a displacement amount from a reference position of the anti-vibration lens 36 for canceling image blur. The CPU 28 outputs the correction amount which is sequentially calculated based on the input angular velocity signal to a D/A converter 30 as a control signal representing a target position for moving the anti-vibration lens 36.

The control signal output from the CPU 28 to the D/A converter 30 is converted into an analog signal by the D/A converter 30, and then is input to the motor driving circuit 32. The motor driving circuit 32 drives the motor 34 for moving the anti-vibration lens 36, for example, in the horizontal direction so as to move the anti-vibration lens 36 to a position corresponding to a value (a correction amount) of the control signal output from the CPU 28. With such a configuration, it is possible to correct the image blur which is caused by the vibration applied to the imaging optical system.

Also, the CPU 28 of the image stabilization apparatus 60 also performs panning/tilting judgment in addition to the above-mentioned calculation of the correction amount. The panning/tilting judgment is a judgment as to whether or not the imaging optical system (the camera) is performing an operation for changing composition such as a panning operation and a tilting operation not based on vibration but based on camera user's intentional manipulation for recomposition. Specific description of the panning/tilting judgment will be omitted. However, for example, it is judged that the panning/tilting operation is being performed when the angular velocity signal, which is output from the angular velocity sensor 20, is acquired from a line other than the line passing through the HPF 22, the LPF 24, and the A/D converter 26 and if a value of the angular velocity signal is continuously larger than a predetermined threshold value for a predetermined time. Until when it is judged based on this condition that the panning/tilting operation is being performed, it is judged that the panning/tilting operation is not being performed. Also, if the value of the angular velocity signal continuously becomes lower than the predetermined threshold value for the predetermined time after it is judged that the panning/tilting operation is active, it is judged that the panning/tilting operation is completed. Furthermore, conditions for the panning/tilting judgment are not limited to this.

If the panning/tiling judgment indicates that the panning/tilting operation is being performed, the CPU 28 performs a process for suspending the image stabilization mentioned above. For example, by increasing the cut-off frequency of the HPF 22, the angular velocity signal is practically cut off. Then, calculation of the correction amount is continuously performed. With such a configuration, the correction amount is gradually lowered to 0, and the anti-vibration lens 36 is driven based on the correction amount. Thus, the anti-vibration lens 36 moves to the reference position and stops. After it is judged that the panning/tilting operation is being performed, if it is judged that the panning/tilting operation is completed, the cut-off frequency of the HPF 22 is changed to the original state and the image stabilization is restarted. As described above, the image stabilization is suspended if the panning/tilting operation is being performed. Thus, it is possible to prevent trouble that may be caused by performing the image stabilization during the panning/tilting operation.

Also, another method of the image stabilization may be used in place of the method described in this embodiment. The method according to this embodiment employs an image displacing unit that intentionally displaces an image formation position where the imaging optical system forms an image in the horizontal direction or the vertical direction in the image formation plane by displacing the anti-vibration lens 36. The image displacing unit corrects the image blur by displacing the image so as to cancel the image blur which is caused by the vibration applied to the optical system. The image displacing unit, which intentionally displaces the image, may not employ the anti-vibration lens as described in this embodiment, and for example, may displace an imaging range for effectively forming an image for record and reproduction by displacing the imaging device of the camera. Also, the image displacing unit may be electronic one that intentionally displaces an image by displacing a range for cutting off an image signal for record or reproduction from an image taken by the imaging device of the camera. In the image stabilization according to the other methods, it is also possible to calculate the correction amount for displacing an image based on the displacement amount necessary for canceling the image blur as described in the embodiment, by performing an integration process for the angular velocity signals obtained from the angular velocity sensor 20.

Also, in this embodiment, the angular velocity sensor 20 is employed as a vibration detection sensor. However instead of the angular velocity sensor 20, an optional type sensor (such as an acceleration sensor) for outputting a sensor signal in accordance with vibration may be used. The CPU 28 performs a process according to a type of the vibration detection sensor for the sensor signal generated from the vibration detection sensor, to thereby calculate the correction amount. Also, the CPU 28 can make the panning/tilting judgment based on the sensor signal of the optional type vibration detection sensor.

Also, when it is judged that the panning/tilting operation is being performed, the image stabilization is not completely suspended, but may reduce the effect of the image stabilization (for example, may reduce the correction amount).

The image stabilization apparatus 60 shown in the figure has the connector 60A for inputting the vibration signal, which represents the vibration applied to the imaging optical system (the television camera 10), from the external device, and can acquire the vibration signal from the external device through the connector 60A. Also, the image stabilization apparatus 60 is configured to perform the image stabilization based on the vibration signal acquired from the external device instead of the sensor signal of the angular velocity sensor 20 provided as a component of the image stabilization apparatus 60. For example, the connector 60A is formed on a casing of the lens device 12 as shown in Fig. 1.

Fig. 2 shows an embodiment in which the image stabilization apparatus 60 acquires the vibration signal from the tripod 16 serving as the external device. The tripod 16 is equipped with a vibration detection sensor 52 such as an angular velocity sensor for detecting vibration, and is configured so that a vibration-information output section 50 outputs, as a vibration signal through the connector 16B, a sensor signal output from the vibration detection sensor 52 or a signal obtained by performing a predetermined process for the sensor signal. The connector 16B and the connector 60A of the image stabilization apparatus 60 are connected to each other by the cable 18 (see Fig. 1). Thus, the vibration signal output from the tripod 16 is given as an external input to the image stabilization apparatus 60.

In this embodiment, it is assumed that the vibration signal output form the tripod 16 is an angular velocity signal as in the case of the output signal (the angular velocity signal) of the angular velocity sensor 20 provided in the lens device 12. Also, it is assumed that a process that is performed in the CPU 28 in the case where the CPU 28 performs image stabilization based on such a vibration signal is the same as the process, which is performed in the case where the CPU 28 performs the image stabilization based on the angular velocity signal acquired from the angular velocity sensor 20 provided in the image stabilization apparatus 60. In other words, the processes are not particularly different from each other. It is noted that even if the vibration signal output from the tripod 16 is not the angular velocity signal, it is possible to perform the image stabilization based on such a vibration signal so long as the CPU 28 performs a process according to the type of the vibration signal.

Also, in the following description, it is assumed that the vibration signal obtained from the tripod 16 is referred to as a tripod-side sensor signal, and that the angular velocity signal obtained from the angular velocity sensor 20 is referred to as a lens-side sensor signal.

Like the HPF 22, the LPF 24, and the A/D converter 26 for the lens-side sensor signal, the image stabilization apparatus 60 is provided with a high pass filter (HPF) 42, a low pass filter (LPF) 44, and an A/D converter 46 for processing the tripod-side sensor signal input form the connector 60A.

The HPF 42 mainly cuts off a DC component (a component of a low band frequency not more than the predetermined cut-off frequency) of the tripod-side sensor signal input from the tripod 16, and the other frequency components of the tripod-side sensor signal pass through the HPF 42. The sensor signal passing through the HPF 42 is subsequently input to a LPF 44. The LPF 44 cuts off signals (noises) of high frequency components which are not a target of the image stabilization, from the frequency components of the sensor signal input. The other frequency components pass through the LPF 44. The sensor signal passing through the LPF 44 is converted into a digital signal by the A/D converter 46, and then is input to the CPU 28.

When the tripod-side sensor signal is input to the image stabilization apparatus 60, the CPU 28 selects one of the tripod-side sensor signal and the lens-side sensor signal as a valid signal sensor, and calculates a correction amount for correcting image blur based on the selected sensor signal as described above. Then, the CPU 28 outputs the correction amount to the D/A converter 30 as a control signal indicating a movement target position of the anti-vibration lens 36. That is, the CPU 28 selects as to whether or not to validate the tripod-side sensor signal, performs the image stabilization based on the tripod-side sensor signal when validating the tripod-side sensor signal, and performs the image stabilization based on the lens-side sensor signal when not validating the tripod-side sensor signal (when invalidating the tripod-side sensor signal).

In this case, the way for selecting one of the tripod-side sensor signal and lens-side sensor signal as the valid sensor signal may be an automatic mode or a manual mode.

In the case of the automatic mode, the tripod-side sensor signal is validated when the tripod-side sensor signal is input, and the lens-side sensor signal is validated when the tripod-side sensor signal is not input. The judgment as to whether or not the tripod-side sensor signal is input may be made by any method such as a method of making the judgment based on detection of a voltage and current of the line through which the tripod-side sensor signal is transmitted or a method of making the judgment based on a result of detecting as to whether or not a cable is connected to the connector 60A. In this case, for example, if the connector 60A of the image stabilization apparatus 60 (the lens device 12) and the connector 16B of the tripod 16 that outputs the vibration signal are connected to each other by the cable 18 as shown in Fig. 1, the tripod-side sensor signal is validated. Thus, the image stabilization is performed based on the vibration signal output from the tripod 16. If it is desired to perform the image stabilization using the lens-side sensor signal, the cable 18 is not connected to the connector 16B and 60A and the vibration signal output from the tripod 16 is not input to the image stabilization apparatus 60.

On the other hand, in the case of the manual mode, as shown in the figure, a changing-over switch 48 manipulated by an user is provided, and the user can select as to whether the tripod-side sensor signal or the lens-side sensor signal is to be validated, by using the changing-over switch 48. The CPU 28 validates the sensor signal selected by the user by reading a state of the changing-over switch 48. The changing-over switch 48 may be provided on an optional position such as in the lens device 12, in a predetermined controller connected to the lens device 12, or in the camera device 14.

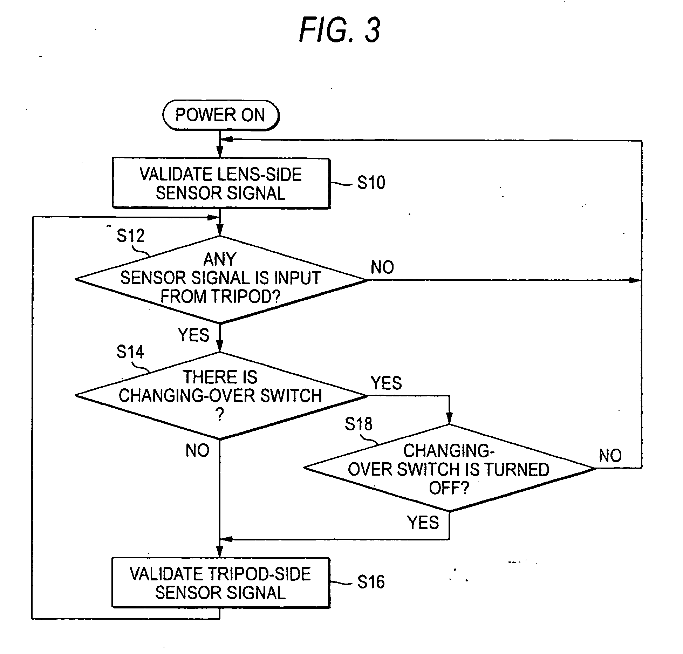

Fig. 3 is a flow chart showing a sequence of a selection process corresponding to both of the case of the automatic selection and the case of manual selection of the valid sensor signal.

When the power source is turned on, first, the CPU 28 validates the lens-side sensor signal (step S10). Subsequently, it is judged as to whether or not a sensor signal is input from the tripod (step S12). If it is determined No in this step, the flow returns to step S10. That is, the lens-side sensor signal is validated. If it is determined Yes in step S12, it is judged as to whether the changing-over switch 48 shown in Fig. 2 is provided (step S 14). If it is determined No, it is the case of the automatic selection of the sensor signal, and the tripod-side sensor signal is validated (step S16). If it is determined Yes in step S 14, it is the case of the manual selection of the sensor signal, and it is judged as to whether the changing-over switch is turned off (step S 18). If it is determined No in this step, the flow returns to step S10. On the other hand, if it is determined Yes, the tripod-side sensor signal is validated.

According to the process mentioned above, even if the image stabilization apparatus 60 can perform the image stabilization without using the vibration signal obtained from the external device and if the image stabilization apparatus 60 can acquire the vibration signal from the external device, the image stabilization apparatus 60, it is possible to perform the image stabilization based on the vibration signal acquired from the external device.

The invention is not limited to the image stabilization apparatuses for use in the television cameras for broadcasting or business, and may be also applied to image stabilization apparatuses for use in general still cameras or video cameras.

Also, described is the case where the vibration information is acquired from the tripod as an external device. However, the invention may be also applied to the case where the vibration signal is acquired from a mount board of a camera other than the tripod or an optional external device.

Also, in the above embodiment, described is the case where the image stabilization apparatus 60 acquires the vibration signal indicating vibration from the external device. However, the apparatus may be configured to perform the panning/tilting judgment based on the panning/tilting signal by acquiring, from the external device (the tripod 16 or the like), the panning/tilting signal indicating as to whether or not the panning/tilting operation is being performed. For example, a connector for acquiring the panning/tilting signal is provided in the image stabilization apparatus 60 and the connector is connected to the external device for outputting the panning/tilting signal so that the CPU 28 can acquire the panning/tilting signal input from the connector. When the vibration signal and the panning/tilting signal are output from the same external device, the panning/tilting signal may be also acquired from the connector 60A for inputting the vibration signal. Also, the selection as to whether or not the panning/tilting signal obtained from the external device is validated may be automatically or manually performed in a similar manner to the selection as to whether or not the vibration signal obtained from the external device is validated. When a user manually makes the selection by manipulating the changing-over switch, the selection may be made by a changing-over switch other than the changing-over switch 48 for selecting as to whether or not the vibration signal obtained from the external device is validated, and may be made by using the changing-over switch 48 together with the selection for the vibration signal obtained from the external device.

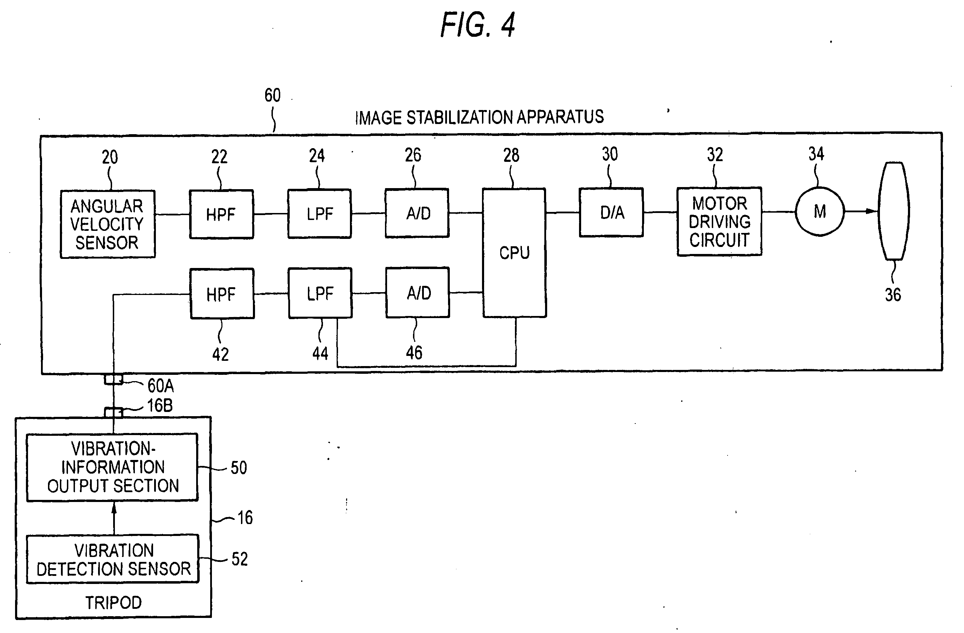

Hereinafter, an embodiment in which when the image stabilization apparatus 60 shown in Figs. 1 and 2 acquires the vibration signal from the external device, initialization setting for appropriately removing noises in the vibration signal is performed will be described. Fig. 4 is a diagram showing the configuration of an image stabilization apparatus 60 according to this embodiment. The same reference numerals of Fig. 2 are assigned to components of Fig. 4 that perform common or similar operations to those of the image stabilization apparatus 60 shown in Fig. 2.

Similarly to Fig. 2, Fig. 4 shows the case where the image stabilization apparatus 60 acquires the vibration signal from the tripod 16. As compared with the image stabilization apparatus 60 shown in Fig. 2, the image stabilization apparatus shown in Fig. 4 is different in that the CPU 28 can change the cut-off frequency of the LPF 44 through which the vibration signal (the tripod-side sensor signal) from the tripod 16 passes through before the vibration signal is acquired by the CPU 28. Also, Fig. 4 shows the case where the image stabilization apparatus 60 automatically makes the selection of the sensor signal, and the changing-over switch 48 shown in Fig. 2 is not provided. Accordingly, if the tripod-side sensor signal is input, the tripod-side sensor signal is validated.

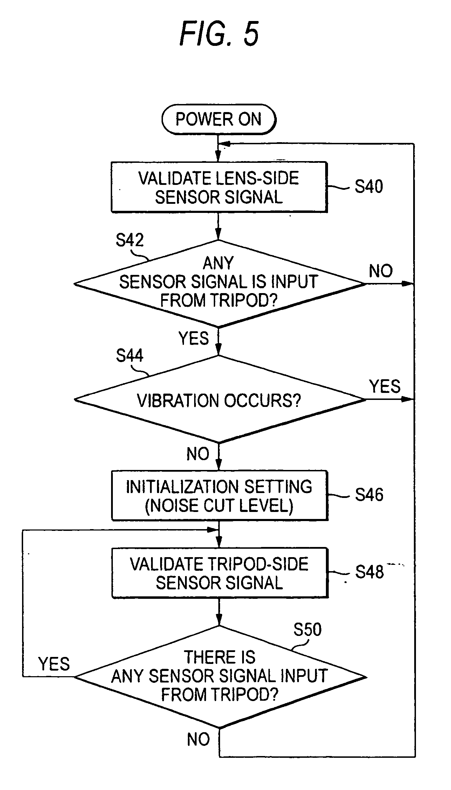

Fig. 5 is a flow chart showing a sequence of a process performed in the CPU 28 until when the tripod-side sensor signal is validated in the case where the power source of the image stabilization apparatus 60 is turned on while the connector 60A of the image stabilization apparatus 60 (the lens device 12) and the connector 16B of the tripod 16 are connected to each other by the cable 18 as shown in Fig. 1.

When the power source is turned on, first, the CPU 28 validates the lens-side sensor signal (step S40). Subsequently, it is judged as to whether or not the tripod-side sensor signal is input (step S42). If the connector 60A of the image stabilization apparatus 60 and the connector 16B of the tripod 16 are not connected to each other, it is determined No in the judgment process of the step S42. Then, the flow returns to step S40. That is, the state where the lens-side sensor signal is validated is kept, and thus the image stabilization is performed based on the lens-side sensor signal.

On the other hand, if it is determined Yes in step S42, the CPU 28 judges as to whether or not vibration occurs (step S44). The judgment as to whether or not vibration occurs may be made, for example, by reading the lens-side sensor signal and detecting as to whether or not the sensor signal indicates a no-vibration state (a vibrationless state; whether or not a value of the sensor signal is less than the predetermined value). However, another method may be used.

If it is determined Yes in step S44, that is, if it is determined that vibration occurs, the process of the image stabilization is performed based on the lens-side sensor signal.

If it is determined No in step S44, that is, if it is determined that vibration does not occur, the initialization setting for appropriately removing noises from the tripod-side sensor signal is performed in order to perform the image stabilization based on the tripod-side sensor signal (step S46). That is, frequencies of signal components to be removed as noises from the tripod-side sensor signal are set to appropriate frequencies by changing the cut-off frequency of the LPF 44. For example, the CPU 28 reads the tripod-side sensor signal from the A/D converter 46, and changes the cut-off frequency of the LPF 44 so that the sensor signal indicates the no-vibration state. Specifically, the cut-off frequency of the LPF 44 is increased or decreased by a predetermined value at a time while sampling the tripod-side sensor signal, and the cut-off frequency of the LPF 44 is set to a value of the cut-off frequency at the time when an average value or the maximum value of the sensor signal reaches a predetermined value representing the no-vibration state. Thereby, the noise in the tripod-side sensor signal is appropriately removed.

Also, in order to prevent the case where the noises in the tripod-side sensor signal are small and the cut-off frequency of the LPF 44 set as described above is unnecessarily increased with respect to the frequency range of vibration which is the target of the image stabilization, the maximum setting value of the cut-off frequency may be determined in advance.

Also, the cut-off frequency of the LPF 44 may not be set so that the average value and the maximum value of the tripod-side sensor signal becomes equal to the predetermined value, but the cut-off frequency of the LPF 44 may be set so that a fluctuation range of the correction amount calculated by the tripod-side sensor signal becomes less than the predetermined value (a fluctuation range in which it can be judged that the anti-vibration lens 36 does not move) in the no-vibration state. Also, the frequencies of the tripod-side sensor signal may be analyzed and then the cut-off frequency of the LPF 44 may be set so that the frequency components corresponding to noises can be removed.

As described above, when the initialization setting is performed in step S46, the CPU 28 validates the tripod-side sensor signal (step S48). Thereby, it is started to perform the image stabilization based on the tripod-side sensor signal. Also, the CPU 28 judges as to whether or not the tripod-side sensor signal exists (step S50). If it is determined Yes, the flow returns to step S48 in order to continuously perform the image stabilization based on the tripod-side sensor signal. On the other hand, if it is determined No, the flow returns to step S40.

In the embodiment mentioned above, the noise cut level of the tripod-side sensor signal is adjusted by changing the cut-off frequency of the LPF 44. However, noises in the tripod-side sensor signal may be removed by a filtering process performed in the CPU 28 while changing the noise cut level, rather than it is configured that the cut-off frequency of the LPF 44 can be changed.

Also, in the embodiment mentioned above, when the tripod-side sensor signal is input, the tripod-side sensor signal is automatically validated. However, even in the case where it is manually selected by using the changing-over switch 48 in Fig. 2 whether or not the tripod-side sensor signal is validated, the same method may be applied when it is instructed by the changing-over switch 48 to validate the tripod-side sensor signal. That is, when it is instructed to validate the tripod-side sensor signal, the processes from step S40 of Fig. 5 may be performed, and the process of judging as to whether or not validation of the tripod-side sensor signal is selected by the changing-over switch 48 may be performed in step S50, instead of the process of judging as to whether or not the tripod-side sensor signal exists. Even in this case, when it is instructed by the changing-over switch 48 to switch the valid sensor signal from the lens-side sensor signal to the tripod-side sensor signal, the tripod-side sensor signal is validated not immediately but after the appropriate initialization setting of the noise cut level is performed.

Also, irrespectively of whether or not the vibration signal (the tripod-side sensor signal) obtained from the external device is selected as the valid sensor signal to be used in the image stabilization, when the vibration signal is input from the external device, the initialization setting may be performed at the time of turning on the power source.

Also, in the embodiment mentioned above, the initialization setting is performed at the time of turning on the power source. However, a predetermined switch may be provided, the initialization setting may be performed at the time when it is instructed by the predetermined switch to perform the initialization setting or when it is instructed to validate the vibration signal obtained from the external device.

## Claims

1. A camera (10) comprising an image stabilization apparatus (60), an imaging optical system, and a vibration detection sensor, the
image stabilization apparatus (60), comprising
an image stabilization unit that performs image stabilization for canceling image blur being caused by vibration applied to the imaging optical system, based on a sensor signal which is output from a vibration detection sensor (20) that detects the image blur;
**characterized by** the image stabilization apparatus (60) further comprising
a vibration signal acquisition unit (60A) that acquires a vibration signal from an external device (16); and
a vibration signal validation unit (28) that automatically or manually selects as to whether or not to validate the vibration signal acquired by the vibration signal acquisition unit (60A), wherein
when the vibration signal validation unit (28) selects to validate the vibration signal, the image stabilization unit performs the image stabilization based on the vibration signal instead of the sensor signal output from the vibration detection sensor (20),
the image stabilization apparatus (60) further comprising:
a processing unit (20) that performs a panning/tilting judgment, based on the sensor signal output from the vibration detection sensor (20), as to whether or not a panning/tilting operation is being performed, wherein when judging that the panning/tilting operation is being performed, the processing unit (28) performs a process of suspending the image stabilization during a period in which the panning/tilting operation is being performed or reducing an effect of the image stabilization during a period in which the panning/tilting operation is being performed;
a panning/tilting signal acquisition unit (60A) that acquires a panning/tilting signal, which represents as to whether or not the panning/tilting operation is being performed, from the external device (16); and
a panning/tilting signal validation unit (28) that automatically or manually selects as to whether or not to validate the panning/tilting signal acquired by the panning/tilting signal acquisition unit (60A), wherein
when the panning/tilting signal validation unit (28) selects to validate the panning/tilting signal, the processing unit (28) performs the panning/tilting judgment based on the panning/tilting signal.

2. The camera (10) according to claim 1, wherein when the vibration signal is input from the external device (16), the vibration signal validation unit (28) automatically validates the vibration signal.

3. The camera (10) according to claim 1, wherein when the panning/tilting signal is input from the external device (16), the panning/tilting signal validation unit (28) automatically validates the panning/tilting signal.

4. The camera (10) according to claim 1, further comprising:
a noise removal unit that removes noise from the vibration signal acquired by the vibration signal acquisition unit (60A); and
a setting unit that sets frequencies of a signal component to be removed as the noise by the noise removal unit, based on a vibration signal which is acquired by the vibration signal acquisition unit (60A) at a time of no-vibration, wherein
when the image stabilization unit is to perform the image stabilization based on the vibration signal acquired by the vibration signal acquisition unit (60A) instead of the sensor signal of the vibration detection sensor (20), after the setting unit completes the setting, the image stabilization unit performs the image stabilization based on the vibration signal acquired by the vibration signal acquisition unit (60A).

5. The camera (10) according to claim 4 wherein when power is turned on, when a command of the setting is given or when it is instructed to perform the image stabilization based on the vibration signal acquired by the vibration signal acquisition unit (60A), the setting unit performs the setting.

6. The camera (10) according to claim 1, wherein the external device (16) is a tripod (16) that supports the camera (10).

## Patentansprüche

1. Kamera (10) umfassend ein Bildstabilisierungsgerät (60), ein optisches Abbildungssystem, und einen Vibrationsdetektionssensor, wobei das Bildstabilisierungsgerät (60) umfasst
eine Bildstabilisierungseinheit, die eine Bildstabilisierung zum Beheben von Bildunschärfe durchführt, welche durch auf das optische Abbildungssystem angewandte Vibrationen verursacht wird, basierend auf einem Sensorsignal, welches von einem Vibrationsdetektionssensor (20) ausgegeben wird, welcher die Bildunschärfe detektiert;
**dadurch gekennzeichnet, dass** das Bildstabilisierungsgerät (60) weiterhin umfasst
eine Vibrationssignal-Erfassungseinheit (60A), die ein Vibrationssignal von einem externen Gerät (16) erfasst; und
eine Vibrationssignal-Validierungseinheit (28), die automatisch oder manuell auswählt, ob das von der Vibrationssignal-Erfassungseinheit (60A) erfasste Vibrationssignal validiert wird oder nicht, wobei
die Bildstabilisierungseinheit die Bildstabilisierung basierend auf dem Vibrationssignal anstelle des Sensorsignals, welches von dem Vibrationsdetektionssensor (20) ausgegeben wird, durchführt, wenn die Vibrationssignal-Validierungseinheit (28) auswählt, dass das Vibrationssignal validiert wird, und
wobei das Bildstabilisierungsgerät (60) weiterhin umfasst:
eine Verarbeitungseinheit (20), die eine Schwenken-/Neigen-Beurteilung durchführt, basierend auf dem von dem Vibrationsdetektionssensor (20) ausgegebenen Sensorsignal ob ein Schwenken-/Neigen-Vorgang durchgeführt wird oder nicht, wobei wenn beurteilt wird, dass der Schwenken-/Neigen-Vorgang durchgeführt wird, die Bearbeitungseinheit (28) einen Prozess des Aussetzens der Bildstabilisierung während einer Zeitspanne, in welcher der Schwenken-/Neigen-Vorgang durchgeführt wird oder einen Prozess des Reduzierens eines Effekts der Bildstabilisierung durchführt, während einer Zeitspanne, in welcher der Schwenken-/Neigen-Vorgang durchführt wird;
eine Schwenken-/Neigen-Signal-Erfassungseinheit (60A), die ein Schwenken-/Neigen-Signal von dem externen Gerät (60) erfasst, welches repräsentiert, ob der Schwenken-/Neigen-Vorgang durchgeführt wird oder nicht; und
eine Schwenken-/Neigen-Signal-Validierungseinheit (28) die automatisch oder manuell auswählt ob das Schwenken-/Neigen-Signal, welches von der Schwenken-/Neigen-Signal-Erfassungseinheit (60A) erfasst wird, validiert wird oder nicht, wobei
die Verarbeitungseinheit (28) die Schwenken-/Neigen-Beurteilung basierend auf dem Schwenken-/Neigen-Signal durchführt, wenn die Schwenken-/Neigen-Signal-Validierungseinheit (28) auswählt, das Schwenken-/Neigen-Signal zu validieren.

2. Kamera (10) gemäß Anspruch 1, wobei die Vibrationssignal-Validierungseinheit (28) das Vibrationssignal automatisch validiert, wenn das Vibrationssignal von dem externen Gerät (60) zugeführt wird.

3. Kamera (10) nach Anspruch 1, wobei die Schwenken-/Neigen-Signal-Validierungseinheit (28) das Schwenken-/Neigen-Signal automatisch validiert, wenn das Schwenken-/Neigen-Signal von dem externen Gerät (60) zugeführt wird.

4. Kamera (10) nach Anspruch 1, weiterhin umfassend:
eine Störsignal-Beseitigungseinheit, die ein Störsignal aus dem von der Vibrationssignal-Erfassungseinheit (60A) erfassten Vibrationssignal beseitigt; und
eine Festlegungseinheit, die Frequenzen einer Signalkomponente festlegt, welche als Störsignal durch die Störsignal-Beseitigungseinheit zu beseitigen sind, basierend auf einem Vibrationssignal, welche zu einer Zeit der nicht-Vibration durch die Vibrationssignal-Erfassungseinheit (60A) erfasst wird, wobei
wenn die Bildstabilisierungseinheit die Bildstabilisierung basierend auf dem durch die Vibrationssignal-Erfassungseinheit (60A) erfassten Vibrationssignal anstelle des Sensorsignals des Vibrationsdetektionssensors (20) durchführen soll, und nachdem die Festlegungseinheit die Festlegung abgeschlossen hat, die Bildstabilisierungseinheit die Bildstabilisierung basierend auf dem von der Vibrationssignal-Erfassungseinheit (60A) erfassten Vibrationssignal durchführt.

5. Kamera (10) nach Anspruch 4, wobei die Festlegungseinheit die Festlegung durchführt, wenn der Strom eingeschaltet ist, wenn ein Kommando der Festlegung gegeben wird oder wenn angewiesen wird die Bildstabilisierung basierend auf dem von der Vibrationssignal-Erfassungseinheit (60A) erfassten Vibrationssignal durchzuführen.

6. Kamera (10) nach Anspruch 1, wobei das externe Gerät (16) ein Stativ ist (16), welches die Kamera (10) trägt.

## Revendications

1. Caméra (10) comprenant un dispositif de stabilisation d'image (60), un système optique de formation d'image et un capteur de détection de vibration, le dispositif de stabilisation d'image (60) comprenant :
une unité de stabilisation d'image qui effectue une stabilisation d'image pour annuler un flou d'image provoqué par une vibration appliquée au système optique de formation d'image, sur la base d'un signal de capteur qui est délivré par un capteur de détection de vibration (20) qui détecte le flou d'image ; **caractérisée en ce que** le dispositif de stabilisation d'image (60) comprend en outre :
une unité d'acquisition de signal de vibration (60A) qui acquiert un signal de vibration auprès d'un dispositif externe (16) ; et
une unité de validation de signal de vibration (28) qui détermine, automatiquement ou manuellement, s'il convient ou non de valider le signal de vibration acquis par l'unité d'acquisition de signal de vibration (60A), dans laquelle
lorsque l'unité de validation de signal de vibration (28) détermine qu'il convient de valider le signal de vibration, l'unité de stabilisation d'image effectue la stabilisation d'image sur la base du signal de vibration au lieu du signal de capteur délivré par le capteur de détection de vibration (20),
le dispositif de stabilisation d'image (60) comprenant en outre :
une unité de traitement (20) qui effectue un jugement de panoramique/d'inclinaison, sur la base du signal de capteur délivré par le capteur de détection de vibration (20), quant à savoir si une opération de panoramique/d'inclinaison est effectuée ou non, dans laquelle, lorsqu'il est jugé que l'opération de panoramique/d'inclinaison est effectuée, l'unité de traitement (28) effectue un processus de suspension de la stabilisation d'image pendant une période dans laquelle l'opération de panoramique/d'inclinaison est effectuée ou de réduction d'un effet de la stabilisation d'image pendant une période dans laquelle l'opération de panoramique/d'inclinaison est effectuée ;
une unité d'acquisition de signal de panoramique/d'inclinaison (60A) qui acquiert un signal de panoramique/d'inclinaison, qui représente le fait que l'opération de panoramique/d'inclinaison est effectuée ou non, auprès du dispositif externe (16) ; et
une unité de validation de signal de panoramique/d'inclinaison (28) qui détermine, automatiquement ou manuellement, s'il convient ou non de valider le signal de panoramique/d'inclinaison acquis par l'unité d'acquisition de signal de panoramique/d'inclinaison (60A), dans laquelle
lorsque l'unité de validation de signal de panoramique/d'inclinaison (28) détermine qu'il convient de valider le signal de panoramique/d'inclinaison, l'unité de traitement (28) effectue le jugement de panoramique/d'inclinaison sur la base du signal de panoramique/d'inclinaison.

2. Caméra (10) selon la revendication 1, dans laquelle, lorsque le signal de vibration est reçu du dispositif externe (16), l'unité de validation de signal de vibration (28) valide automatiquement le signal de vibration.

3. Caméra (10) selon la revendication 1, dans laquelle, lorsque le signal de panoramique/d'inclinaison est reçu du dispositif externe (16), l'unité de validation de signal de panoramique/d'inclinaison (28) valide automatiquement le signal de panoramique/d'inclinaison.

4. Caméra (10) selon la revendication 1, comprenant en outre :
une unité de retrait de bruit qui retire le bruit du signal de vibration acquis par l'unité d'acquisition de signal de vibration (60A) ; et
une unité de réglage qui règle les fréquences d'une composante de signal à retirer en tant que bruit par l'unité de retrait de bruit, sur la base d'un signal de vibration qui est acquis par l'unité d'acquisition de signal de vibration (60A) à un instant d'absence de vibration, dans laquelle
lorsque l'unité de stabilisation d'image doit effectuer la stabilisation d'image sur la base du signal de vibration acquis par l'unité d'acquisition de signal de vibration (60A) au lieu du signal de capteur du capteur de détection de vibration (20), après que l'unité de réglage a terminé le réglage, l'unité de stabilisation d'image effectue la stabilisation d'image sur la base du signal de vibration acquis par l'unité d'acquisition de signal de vibration (60A).

5. Caméra (10) selon la revendication 4, dans laquelle, lors de la mise en marche, lorsqu'une commande de réglage est donnée ou lorsqu'il est demandé d'effectuer la stabilisation d'image sur la base du signal de vibration acquis par l'unité d'acquisition de signal de vibration (60A), l'unité de réglage effectue le réglage.

6. Caméra (10) selon la revendication 1, dans laquelle le dispositif externe (16) est un trépied (16) qui supporte la caméra (10).
